Europäisches Patentamt

European Patent Office

Office européen des brevets

(11) Publication number: **0 331 513 B1**

# EUROPEAN PATENT SPECIFICATION

(45) Date of publication of patent specification: **02.02.94** (51) Int. Cl.⁵: **G01N 27/417**

(21) Application number: **89302144.4**

(22) Date of filing: **03.03.89**

(54) **Oxygen sensor and method of producing the same.**

(30) Priority: **03.03.88 JP 48537/88**
**12.10.88 JP 254776/88**
**20.01.89 JP 10028/89**

(43) Date of publication of application:
**06.09.89 Bulletin 89/36**

(45) Publication of the grant of the patent:
**02.02.94 Bulletin 94/05**

(84) Designated Contracting States:
**DE FR GB**

(56) References cited:
**US-A- 4 021 326**
**US-A- 4 080 276**
**US-A- 4 297 192**
**US-A- 4 359 374**
**US-A- 4 650 697**

(73) Proprietor: **NGK INSULATORS, LTD.**
**2-56, Suda-cho, Mizuho-ku**
**Nagoya City Aichi Pref.(JP)**

(72) Inventor: **Ogasawara, Takayuki E-401 Sun**
**Mansion Chikusa Park**
**3-25 Wakamizu 2-chome**
**Chikusa-Ku**
**Nagoya City Aichi Pref.(JP)**
Inventor: **Ishiguro, Fujio**
**160 Takayashiro 1-chome**
**Meito-Ku**
**Nagoya City Aichi Pref.(JP)**
Inventor: **Kurachi, Hiroshi**
**106 Aza-Saigokatsudo**
**Ohaza-Wadakassa**
**Konan City Aichi Pref.(JP)**

(74) Representative: **Paget, Hugh Charles Edward**
**et al**
**MEWBURN ELLIS**
**2 Cursitor Street**
**London EC4A 1BO (GB)**

**Description**

The present invention relates to an oxygen sensor, particularly an oxygen sensor for measuring oxygen content in gases, such as exhaust gases from internal combustion engines, boilers, or the like, and a method of producing the same.

Concentrations of oxygen in exhaust gases from internal combustion engines of automobiles, boilers or the like are detected on the principle of an oxygen concentration cell using an oxygen ion conductive solid electrolyte such as zirconia ceramics for controlling the air-fuel ratio or combustion state of the internal combustion engine etc.

Oxygen sensors of this type of oxygen concentration detector have a structure of electrodes as sensing elements on the inner and outer surfaces of a closed-end cylinder or plate-shaped solid electrolyte body, the inner electrode being exposed to the atmosphere as a reference electrode exposed to a reference gas of a reference oxygen concentration, and the outer electrode being exposed to an exhaust gas to be measured as a measuring electrode. By detecting an electromotive force generated by a difference of oxygen concentrations at the reference electrode and the measuring electrode, the oxygen concentration in the exhaust gas is measured.

In conventional oxygen sensors of this type, the oxygen sensor element comprises, as major components, a shaped body made of a desired oxygen ion conductive solid electrolyte, and a plurality of electrodes arranged on the surface of the body. Such sensor elements have drawbacks in that the measuring electrode which is the outer electrode is worn and damaged by the action of the exhaust gas at high temperature, leading to deterioration of its sensing function and other problems. Therefore, in order to protect such a measuring electrode, a porous protective coating layer made of spinel or the like is formed on the measuring electrode to a desired thickness by a plasma thermal spray method or a print sintering method, etc. (see for example US-A-4297192).

However, even in this sensor element having the protective coating layer, problems arise (see also US-A-4021326). For example, if it is mounted as an oxygen sensor on an exhaust pipe of an automobile, and an inferior fuel containing an organic silicon, etc., is used inadvertently or an engine packing or the like containing a silicon compound is used and is burned by the engine, fine particulate shaped or gaseous organic and inorganic silicon compounds are formed and pass through the pores of the protective coating layer to adhere on the surface of the ceramics, or are adsorbed on the surface of the measuring electrode or the interface between the measuring electrode and the ceramics to cause deterioration of the sensor output or deterioration of the response. These problems are called silicon poisoning of oxygen sensors.

It is conceivable to protect the measuring electrode by thickening the protective coating or making the pores small, to prevent the fine particles of the silicon compounds from reaching the measuring electrode. However, this is not always satisfactory in that the gaseous silicon compounds cannot completely be prevented from reaching the measuring electrode, that the initial response deteriorates due to the thick protective layer and the fine pores, and that the fines pores are liable to clog so that the response deteriorates gradually during the use of the oxygen sensor.

An object of the present invention is to obviate the above mentioned drawbacks and problems so as to provide an oxygen sensor having a good resistance and endurance to the poisoning by silicon compounds.

An oxygen sensor suffering from Si poisoning is easily differentiated from unaffected ones, because such a suffering oxygen sensor mounted on an automobile engine for testing emission values of an exhaust gas shows a larger value of NOx than unaffected ones and exceeds a regulation value specified by the government. Therefore, silicon poisoning may be defined particularly as an excess value of NOx caused by exposure of the sensor to an atmosphere of silicon compounds and measured by an oxygen sensor over the specified regulation value for exhaust gases of automobiles.

The oxygen sensor of the present invention is set out in claim 1.

Preferably, the oxygen sensor has aluminum oxide or silicon oxide or oxide of compounds of Al and Si, such as mullite, etc., adhered on the surface or in the interior pores of the protective layer, in addition to the oxides of Mg, Ca, Sr and Ba.

Preferably, the oxygen sensor has a heating means for heating the sensing portion of the sensor element.

Preferably, the oxygen sensor comprises an oxygen ion conductive solid electrolyte body of one or laminated plates, a reference electrode exposed to a space of a reference gas, and a measuring electrode exposed to a gas to be measured via a porous protective layer arranged on the solid electrolyte, at least the measuring electrode and the porous protective layer being integrally formed by a simultaneous firing, and the porous protective layer having at least one oxide of Mg, Ca, Sr, Ba, adhered on the surface or in the pores of the porous protective layer.

Such oxygen sensor can be produced by applying or impregnating a solution, a suspension or a paste of compounds or oxides of Mg, Ca, Sr, Ba on the surface or in the pores of the protective layer, and then heating the layer to yield respective oxides. The other oxides are preferably adhered simultaneously or in advance in the same manner.

Alternatively, the oxygen sensor can be produced by applying at least one of Mg, Ca, Sr and Ba to the surface or the interior of the protective layer by means of a chemical or physical method, and heating the protective layer to form a respective oxide.

In producing the oxygen sensor, the application of the solution, etc., to the protective layer may be effected suitably by use of an air spray gun or by dipping.

As the oxygen ion conductive electrolyte material forming the oxygen sensor element body (substrate) of the oxygen sensor, use may be made of any known oxygen ion conductive electrolyte. In the present invention, particularly a stabilized zirconia or a partially stabilized zirconia wherein zirconia contains a desired stabilizer such as yttria ($Y_2O_3$), calcia (CaO), magnesia (MgO), or ytterbia ($Yb_2O_3$) etc. may be used. Such solid electrolyte material may also include a desired sintering additive, e.g., $SiO_2$, $Al_2O_3$, $Fe_2O_3$ or clay, such as kaolin as is known.

When forming a shaped body of a desired shape as the sensor element body using a material selected from these solid electrolyte materials, a conventional press forming method, such as a rubber press method can be used, whereby a shaped body is formed which may be an element body of a closed-end cylindrical shape or the like.

Alternatively, the substrate of the plate shaped oxygen sensor element may be formed by preparing a slurry of the solid electrolyte material in five to twenty times by weight of a binder and a solvent, etc., shaping the slurry to a tape shape by means of a doctor blade, etc., and laminating and adhering the tape.

The shaped bodies are then fired to obtain dense ceramics. Thereafter, the shaped bodies may be made into oxygen sensor elements by known methods. For example, the shaped bodies are provided with electrodes and a protective coating layer. Alternatively, the shaped bodies are provided with an electrode material which yields the electrode layer after firing and also with a protective layer on the electrode material, and are then fired to form an integral unit.

As a raw material of the electrode, use may be made of a platinum group catalytic metal such as platinum, rhodium, palladium, etc., gold, silver, alloys thereof, a cermet of one of these heat resistant metals and particles of a ceramics (oxygen ion conductive solid electrolyte is usually used) or the like.

As the protective layer, use may be made of a plasma thermally sprayed layer of a ceramics. Alumina, spinel or the like, are usually used for the ceramics. When firing is adopted to form integral oxygen sensor elements, a printed layer of alumina, or an adhered porous tape shaped layer of the solid electrolyte may also be used. In this case, the porous tape for forming the protective layer can be formed by the same doctor blade method or the like as described for the substrate made of the solid electrolyte material. Preferably, an organic material, carbon or the like which disappears on heating may be added to zirconia, alumina, etc., constituting the protective layer in 10%-40% by weight thereof to form a protective layer having pores of about 0.1 1 $\mu$m (measured by the pressurized mercury incorporation method) at 40% or more to the whole pores after the firing so as to improve the both of the durability and the response of the electrode.

The protective layer has preferably a thickness of 10 - 500 $\mu$m. If the layer is too thick, the gas permeability in the layer is low and the response of the sensor also becomes poor, so that the porosity of the layer should preferably be adjusted within a range of 5-60%.

The protective layer need not be a single layer. It may be a plural layers. For example, if the porosity of the plural layers is increased from the electrode side to the outside surface, the effect of preventing the clogging of the protective layer can be enhanced. Particularly, the protective layer formed integrally by simultaneous firing of ceramics green sheets used for forming the protective layer and the measuring electrode arranged on the solid electrolyte of the substrate, can carry the deposits, such as MgO and the like, more effectively than the porous protective layer formed by the plasma thermal spray method, so that it can exhibit a far better effect in preventing the poisoning by silicon. This is because the former material contains organic material, carbon or the like which disappears during firing so that it can possess a relatively large amount of pores therein after the firing and hence carry a larger amount of deposits, such as MgO and the like, than the latter material which has relatively small pores and suffers from the clogging of the pores by such deposits.

These protective layers, regardless of whether they were produced by the plasma thermal spray method or the integral firing method, are exposed to a temperature higher than a melting point of the protective layer material or a relatively high temperature such as the sintering temperature. As a result, the outer surface of the layer and the pore surface in the layer through which the gas to be measured

3

EP 0 331 513 B1

penetrates, are very low in activity, namely, very stable without having a gas adsorption function.

Therefore, the gaseous material arrives smoothly at the measuring electrode surface and the interface between the electrode and the oxygen ion conductive ceramics (three phase interface) without being adsorbed on the protective layer, so that the oxygen sensor exhibits an output depending on $O_2$ partial pressure of the gas to be measured. Meanwhile, among foreign materials exiting from automobile engines, burned residue of engine oils and Pb present in the gasoline, relatively large particles of oxides which are moved onto the surface of the oxygen sensor element, are deposited on the surface, and a portion of pores of the protective layer. However, if the porosity and pores diameter distribution of the protective layer are suitably selected, the deterioration of the response due to clogging, etc., can be prevented as well as the poisoning of the electrode.

However, organic silicon, such as contained in crude fuel etc., is burned or decomposed in cylinders of engines, passes as gaseous silicon compounds and particulate compounds and silica ($SiO_2$) particles to the protective layer surface of the oxygen sensor element, and is deposited on the protective layer surface, while the gases simultaneously permeate through the protective layer and adhere to the electrode surface and the three phases interface to poison the electrode.

The inventors made observations and experiments leading to a conclusion that, particularly in the case of silicon compounds, the deterioration of the characteristic property of the sensor is caused by the poisoning of the electrodes, because the deterioration occurs even at a relatively minor amount of deposition of the silicon series particles on the protective layer (deterioration of the response, etc., due to clogging of the protective layer cannot be possible at such deposition state). Thus, the poisoning by silicon is particularly the problem.

In the most preferred embodiment of the present invention, active particles consisting essentially of magnesia are adhered on the surface or in the pores of the protective layer to especially effectively prevent the deterioration of the characteristic property of the oxygen sensor caused by gaseous or ultra fine particulate silicon compounds.

The reason why magnesia in the protective layer is effective is because magnesia traps the active silicon (silicon in the silicon compounds) at the surface thereof to convert the active silicon into the stable silica ($SiO_2$) by the function of the oxygen in the magnesia ($MgO$), and further into compounds of magnesia and silica, so that the silicon is prevented from reaching the surface of the ceramics, the surfaces of the electrodes, or the interfaces between the electrode and the ceramics.

Therefore, in order to make the surface of magnesia highly active, preferred methods or states of adhesion of magnesia are as described hereinbelow.

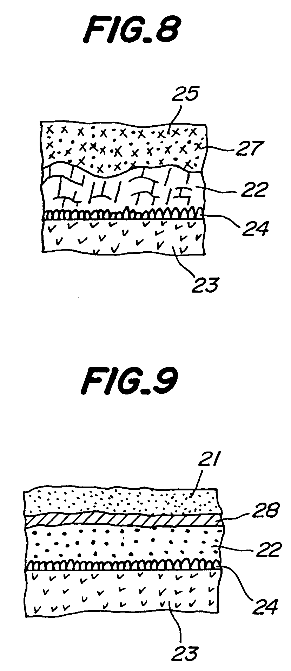

(1) Magnesia adhered in layers on the outer surface of the protective layer (Fig. 6)

Powder of magnesia is prepared, dispersed with a binder in an organic solvent or water, adhered on desired portions of the protective layer 22 protecting the electrode 24 at the surface of the solid electrolyte 23 by means of an air gun spray, printing, blushing, dipping of the sensor element, or the like, dried, and fired to form a layer 21 consisting essentially of magnesia.

Instead of the powder of magnesia, a powder of magnesium carbonate ($MgCO_3$), magnesium hydroxide, or the like, may be used. These powders dissolve slightly, for example, in water, so that they show good adhering properties to the protective layer 22. Preferably, magnesia powder is prepared by grinding coarse particles of molten magnesia to very fine particles so as to obtain an active surface.

The magnesia layer 21 is preferably adhered on the protective layer 22 at a much better gas permeable state than the protective layer 22, considering the response property of the oxygen sensor. For such purpose, an adhesive for magnesia, such as alumina sol, silica sol, or the like, may be mixed with magnesia.

If magnesia is fine, the agglomeration function of the fine magnesia may be utilized to keep it a layered state. Such layers afford an exceedingly improved gas permeability as well as an effect of preventing the clogging by sequential trapping of the other clogging components in exhaust gases by the surface layer of the layers, and sequential peeling off of the surface layer which trapped such clogging components.

A magnesia layer of a thickness of 10-300 $\mu$m gives a good result. The firing temperature is 1,500 °C or less, preferably 1,000 °C or less. If a temperature exceeding 1,500 °C is applied, the activity of magnesia tends to decrease. A firing at 1,000 °C or less does not influence on the activity substantially.

In case of the sensor element wherein the shaped element body, the electrodes, and the protective layer are integrally fired, a good adhesion strength can be exibited, if the magnesia layer is also integrally fired.

4

If metallic magnesium is repeatedly deposited or sputtered on the outer surface of the protective layer and oxidized to yield magnesia, a desired thickness of magnesia layer can be obtained.

Alternatively, a protective layer 22 may again be formed on the layer 21 consisting essentially of magnesia, and the steps may be repeated to obtain a laminate structure of a sandwich of the protective layer and the magnesia layer.

(2) Magnesia adhered on the surface and in the pores of the protective layer (Fig. 7).

The protective layer 22 may be impregnated with an organic solvent solution or an aqueous solution of magnesium compound, such as a solution of magnesium chloride, an aqueous hydrochloric acid solution of magnesium hydroxide, or the like, and then heated to 500-600°C or higher at which the respective magnesium salt can decompose, so as to adhere fine and active MgO particles 25 on the protective layer 22. In this case, a relatively small amount of MgO particles exhibits a sufficient effect. Alternatively, a water soluble magnesium salt may be precipitated as a water insoluble magnesium salt in the protective layer, and then heated up to a desired decomposition temperature or higher to convert the salt into MgO particles. In either cases, if the specific surface area of the deposited MgO particles is larger, the effect of preventing the poisoning by silicon becomes larger, so that many fine MgO particles of a diameter of 0.1 $\mu$m or less should preferably be present.

A better effect can be exhibited, if the protective layer 22 is preliminarily impregnated, for example, with a solution of an aluminum salt, and heated to adhere alumina particles 26 in the protective layer 22, and then magnesia is adhered by the aforementioned methods. In this case, a mixed layer of magnesia particles 25 and alumina particles 26 is provided on the protective layer 22, as indicated in Fig. 7. Instead of alumina particles 26, other particles may also be used, such as particles of silica, spinel, zirconia, etc.

The protective layer 22 has preferably a thickness of 50 $\mu$m or more.

The effect of magnesia is further improved, if the protective layer 22 is such that its porosity increases with the distance from the measuring electrode.

The weight ratio of adhered or carried magnesia to the protective layer may be 0.05 - 60, preferably 0.5 - 20. The amount of the adhered or carried magnesia corresponds to an adhered amount of 0.1-200 mg of magnesia for a sensor element of a known oxygen sensor.

For adjusting the amount of magnesia to be carried by the protective layer, the concentration of the solution may be changed, or repetition of impregnation using a solution of a same concentration and firing may be adopted.

Magnesia need not be uniformly distributed throughout the protective layer. The amount of carried magnesia may have a gradient from the measuring electrode to the outer surface exposed to the gas to be measured. In this case, if the carried amount increases to the outer surface, such structure is effective to prevent or mitigate the poisoning. However, if the carried amount decreases to the outer surface, such structure is effective to prevent or mitigate the clogging.

When the protective layer is formed by the method of laminating green sheets, magnesia may be incorporated in the protective layer by mixing magnesia or a magnesium compound which forms magnesia after the firing with the ceramics constituting the protective layer at the time of forming the green sheets. In this case, not all the magnesia is exposed to the pores of the porous protective layer, so that a large amount of magnesia is necessary as compared with the case of applying magnesia on the layer by the above methods after the firing.

(3) Magnesia dispersed and adhered in a coating alumina layer (Fig. 8).

Magnesia particles 25 may also be carried on a ceramic particles layer 27 made of porous alumina adhered on the protective layer 22. If a relatively coarse and porous $\gamma$-alumina is used as the alumina layer 27, a better result can be obtained.

Instead of alumina, particles of other stable ceramics, such as zirconia, spinel, silica, or the like, may also be used.

(4) Pt group metal catalyst adhered on the protective layer (Fig. 9).

A catalyst layer 28 is formed in the protective layer 22, and a layer 21 consisting essentially of magnesia is adhered on the outer surface of the catalyst layer 28 to improve the durability of the catalyst layer 28.

The catalyst metal 28 may also be adhered in the magnesia layer 21. In this case, the function of magnesia of adsorbing silicon can be improved, so that a better result can be obtained.

(5) An oxygen sensor having a heater.

For enhancing the effect of magnesia, the surface temperature of the sensor is preferably held slightly higher, so that the oxygen sensor having a heater is preferable.

In the case of the oxygen sensor having a heater, the input to the heater can be temporarily increased during the use, or if an exhaust gas is to be measured, a high temperature of the exhaust gas is used to hold the temperature of the sensor element up to 850°C or higher, preferably 900°C or higher, for 5-30 min so as to restore the characteristic property of the sensor deteriorated by poisoning by silicon. This method is effective when the silicon compounds appear in such large amounts that the deterioration of the sensor characteristics can not be prevented by the effect of the magnesia layer alone. This restoring effect is considered due to the conversion of the silicon compounds adhered on the electrode surface into stable silica ($SiO_2$) by heating, or the sintering, etc., of the silicon compounds to decrease surface activity thereof.

Embodiments of the present invention are described below with reference to the accompanied drawings, in which:

Fig. 1 is a schematic partial crosssectional view of an example of an oxygen sensor element body which is used in an oxygen sensor of the present invention;

Fig. 2 is a schematic partial crosssectional view illustrating details of Fig. 1;

Figs. 3a and 3b are schematic perspective view and crosssectional view respectively of another example of an oxygen sensor element body which is used in an oxygen sensor of the present invention;

Fig. 4 is a schematic crosssectional view of an example of the oxygen sensor element which is used in the oxygen sensor of the present invention;

Fig. 5 is a schematic partial crosssectional view showing an example of the heater used in the present invention; and

Figs. 6-9 are respectively schematic crosssectional views of oxygen sensor element bodies showing various adhered states of magnesia according to the present invention.

Reference numbers in the drawings indicate parts as follows:-

| 1 | closed-end cylinder |
|---|---|
| 2 | reference electrode |
| 3 | measuring electrode |
| 4 | protective layer |
| 5 | oxygen sensor element body |
| 6 | lower porous protective layer |
| 7 | upper porous protective layer |
| 8 | heat-generating portion of heater |
| 9 | insulation layer |
| 10 | plate shaped element body |
| 11 | housing |
| 12 | sealing agent |
| 13 | metal washer |
| 14 | metal ring |
| 15 | heater |
| 16 | metallic cover |
| 17 | louver |
| 18 | inlet for exhaust gas |
| 19 | ceramics |
| 20a | lead wire |
| 20b | heat-generating wire |
| 21 | layer consisting essentially of magnesia |
| 22 | protective layer |
| 23 | solid electrolyte |
| 24 | electrode |
| 25 | magnesia particles |
| 26 | alumina |
| 27 | ceramic particles |

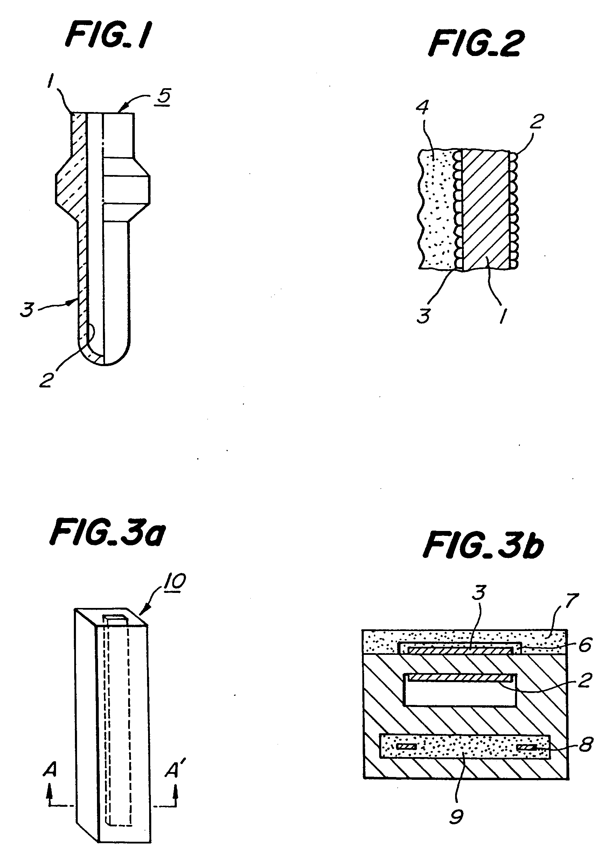

Referring to Figs. 1-3a and 3b, the production of sensor element bodies which are used in oxygen sensors of the present invention will be explained.

First, a material for a solid electrolyte composed of 94 mol% of zirconia and 6 mol% of yttria, for example, is added to a small amount of clay as a sintering additive, mixed well, and calcined at 1,000°C for 3 hrs. The calcined product thus obtained is pulverized in a ball mill of a wet type for 20 hrs. The resultant slurry is mixed with 1 wt% (relative to solid content) of polyvinyl alcohol as a binder, and granulated by a spray dryer to produce a powder (granulated powder) of solid electrolyte material of a particle diameter of about 50 $\mu$m.

The thus obtained granulated powder of the solid electrolyte material is used in rubber press forming to produce a closed-end cylinder and a plate shaped sheet. The cylinder 1 is fired, and thereafter provided with a reference electrode 2, a measuring electrode 3, and a protective layer 4 at desired positions so as to produce an oxygen sensor element body 5 of a closed end cylinder shape. The plate shaped sheet is provided with electrodes 2, 3 and protective layers 6, 7, laminated prior to the firing, and integrally fired to produce a plate-shaped oxygen sensor element body 10.

Namely, as shown in Fig. 2 which illustrates in enlarged scale the sensing portion of the closed cylinder shaped oxygen sensor element body 5 of Fig. 1, the cylinder 1 consisting of the oxygen ion conductive solid electrolyte 1 has a porous platinum layer as the reference electrode at the reference gas side, and also a porous platinum layer as the measuring electrode 3 at the side of the gas to be measured. The measuring electrode 3 is coated with a porous protective layer 4 for protection. The porous protective layer 4 is formed by a plasma thermal spray of a spinnel powder using a thermal spray gas of Ar/N$_2$. The thickness, the porosity, and the pore diameter of the protective layer 4 are controlled by adjusting the grain size of the spinel powder, and the power of the thermal spray, etc.

As shown in Figs. 3a and 3b, the measuring electrode 3 is doubly coated and protected by an underlying porous protective layer 6 consisting of a porous ceramic printed layer, and an upper porous protective layer 7 formed by adhesion of a shaped porous ceramic tape and integral firing thereof. In the embodiment shown in Fig. 3b, the lower protective layer 6 is more dense than the upper protective layer 7, and has a smaller permeability of the gas to be measured than the latter. Also, a heat-generating portion 8 of the heater is integrally incorporated in the plate shaped sensor element body 10 via an insulation layer 9.

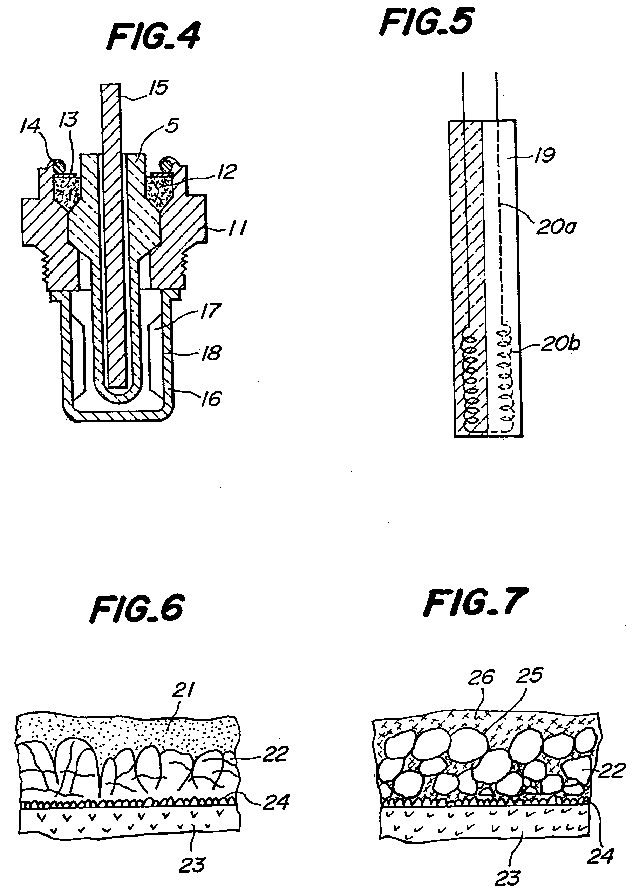

Next, explanations will be made of the assembly and structure of the oxygen sensor using a closed end cylinder shaped oxygen sensor element by referring to Fig. 4. Explanations of a plate shaped oxygen sensor element such as disclosed in Japanese Patent Application Laid-Open No. 60-150,450 can be used for explaining this plate shaped oxygen sensor element, so that the explanations will be omitted.

Referring to Fig. 4, the closed end cylinder shaped oxygen sensor element body 5 is accommodated in a housing 11 and sealed airtightly by a sealing agent 12 made of talc, a metal washer 13, and a metal ring 14, relative to an exhaust gas (not shown) passing through an exhaust gas pipe (not shown). A heater 15 is also accommodated in the cylinder of the oxygen sensor element body 5. A closed end cylinder shaped metallic cover 16 is arranged around the outer circumference of the closed end of the oxygen sensor element body 5 for preventing direct impingement of the exhaust gas on the sensing portion of the oxygen sensor element. The upper end of the cover 16 is tightly fixed to the bottom surface of the metallic cover 16. The metallic cover 16 has louvers 17 cut at the side wall of the cover 16 and raised toward the inside of the cover 16, so as to form inlet holes 18 for the exhaust gas.

As the heater inserted and disposed in the cylinder of the oxygen sensor element body 5 as shown in Fig. 4, use is made of, for example, a ceramic heater composed of a ceramics 19 made of alumina, and a lead wire 20a and a heating wire 20b such as tungsten wire embedded in the ceramics 19, as shown in Fig. 5.

Hereinafter, the present invention will be explained in more detail with reference to examples.

Example 1

The following oxygen sensor elements ①-⑦ are prepared, and assembled into oxygen sensors for testing the durability of the characteristic properties of the oxygen sensors.

① A magnesia powder of an average particle diameter of 0.7 $\mu$m is mixed with a binder, a dispersant, and an organic solvent to form a paste. The paste is printed on the porous protective layer of the plate shaped oxygen sensor element of Fig. 3, dried at 120°C for 30 min, fired at 600°C in air for 1 hr. The magnesia layer produced has an average thickness of 30 $\mu$m.

② A magnesia powder of an average particle diameter of 0.3 $\mu$m is slowly stirred and dispersed in water including a binder. In the slurry the sensor element of Fig. 1 is put until the measuring electrode is immersed, pulled up, and dried. The procedure is repeated three times. Thereafter, the sensor element

7

EP 0 331 513 B1

is fired at 800°C in air for 30 min. The magnesia layer produced has an average thickness of 50 $\mu$m.

③ Magnesium hydroxide is dissolved in a dilute aqueous solution of hydrochloric acid at room temperature to prepare a saturated solution. The sensing portion of the plate shaped sensor element of Fig. 3 is immersed in the solution, then subjected to 600°C in air for 1 hr to adhere magnesia on the surface and in the pores of the protective layer.

④ A powder of porous $\gamma$ alumina of an average particle diameter of 3.7 $\mu$m is mixed with an alumina sol and water to form a solution. The sensor element of Fig. 1 is immersed in the solution, and fired at 500°C. Then, the sensor element is immersed in the saturated solution described in ③, and fired at 600°C in air for 1 hr.

⑤ On the coating of the sensing portion of the plate shaped sensor element of Fig. 3 is formed a catalyst-containing porous alumina layer composed of alumina, platinum and rhodium in a weight ratio of 10:1:0.1, to a thickness of 10 $\mu$m.

Meanwhile, a powder of magnesium of an average particle diameter of 3 $\mu$m is mixed with an alumina sol in such an amount that it occupies 5 wt% of the total weight to prepare a suspension.

The above plate shaped sensor element is immersed in the suspension to form a magnesia layer of an average thickness of 25 $\mu$m.

⑥ The procedure of ② is repeated to form a magnesia layer of an average thickness of 150 $\mu$m.

⑦ The procedure of ② is repeated, except that a silica powder of an average particle diameter of 1.3 $\mu$m is added in an amount of 12 wt% relative to the magnesia powder.

As described above, oxygen sensor elements ①-⑦ are produced, and subjected to durability tests using bench engines. In the durability test, a four cylindered 1.5 $\ell$ gasoline engine having an electronic gasoline injector (EGI) is used, and an operation condition is selected wherein the exhaust gas temperature varies at a cycle of 30 min in a range of 400-700°C. Organic silicon (b.p. about 80°C) is added in a gasoline for the test such that the gasoline contains 0.03 g of Si per 1 liter.

$\lambda$ characteristic property and response time ($T_{RL}$) of the sensor elements are measured before the durability test and after the durability test of 10 hrs.

$\lambda$ characteristic property is determined by changing $\lambda$ value of the exhaust gas of the above engine to 0.95-1.05 by a signal from the exterior, and measuring a $\lambda$ value when the sensor output becomes 0.4 V. $\lambda$ value of the exhaust gas is measured by a gas analyzer. The temperature of the exhaust gas is controlled to 350°C±10°C.

Response time ($T_{RL}$) is determined by changing $\lambda$ value of the same engine from 0.95 to 1.05, and measuring a time required for the decrease of the sensor output to 0.4 V. The result is expressed as $\Delta T_{RL}$ (= $T_{RL}$ of after the durability test-$T_{RL}$ of before the durability test). Samples are three in numbers for each condition. Test Nos. 1, 4, 6, 8, 9, 11, 13 and 15 are effected at a constant heater heating voltage of D.C. 13 V. Test Nos. 2, 5 and 12 are effected by controlling a heater heating voltage to respective sensor element temperature as shown in the following Table 1. In the measurements of $\lambda$ values and $\Delta T_{RL}$, those values which necessitate heating by the heater are all measured at a sensor input of D.C. 13 V. Sensor temperature is the highest temperature of the sensor element during the durability test, and measured at the outer surface of the sensor element by a R thermo couple of wires of a diameter of 0.2 mm. The results are shown in Table 1.

8

Table 1

| | Test No. | Sensor element | Heater heating in durability test | λ value (0.4V, 350°C) Before durability test | λ value (0.4V, 350°C) After durability test | ΔT_RL (350°C) msec |
|---|---|---|---|---|---|---|
| Example | 1 | ① | Yes (max 710°C) | 1.003 | 1.013 | 40 |
| | 2 | ① | Yes (max 850°C) | 1.004 | 1.008 | 20 |
| | 3 | ② | No | 1.008 | 1.027 | 70 |
| | 4 | ② | Yes (max 770°C) | 1.003 | 1.009 | 30 |
| | 5 | ② | Yes (max 860°C) | 1.002 | 1.006 | 20 |
| | 6 | ③ | Yes (max 750°C) | 1.002 | 1.009 | 30 |
| | 7 | ④ | No | 1.006 | 1.020 | 60 |
| | 8 | ④ | Yes (max 760°C) | 1.001 | 1.009 | 30 |
| | 9 | ⑤ | Yes (max 730°C) | 1.002 | 1.012 | 40 |
| | 10 | ⑥ | No | 1.007 | 1.022 | 50 |
| | 11 | ⑥ | Yes (max 790°C) | 0.998 | 1.003 | 30 |
| | 12 | ⑦ | Yes (max 900°C) | 1.001 | 1.004 | 10 |
| Comparative Example | 13 | Plate shaped sensor | Yes (max7 40°C) | 1.002 | 1.045 | ≧1 sec |
| | 14 | Cylindrical sensor | No | 1.010 | ≧1.05 | unmeasurable |
| | 15 | Cylindrical sensor | Yes (max 760°C) | 1.002 | 1.050 | unmeasurable |

From the results of the above Table 1, all the oxygen sensors of the present invention exhibit excellent durability as compared with those of the Comparative Examples.

Example 2

The plate shaped oxygen sensor elements of Fig. 3 are immersed at the sensing portions in a saturated aqueous solution of respective nitrates of Mg, Ca, Sr or Ba or mixed nitrates of Mg and Ca, then fired at 900°C in air for 1 hr to prepare 5 types of sensor elements each having adhered MgO, CaO, SrO or BaO or

9

EP 0 331 513 B1

a composite of MgO and CaO on the surfaces and in the pores of the protective layer and the measuring electrode. The sensor elements are assembled into oxygen sensor as shown in Fig. 4.

The five types of oxygen sensors and a reference oxygen sensor not subjected to the specific treatment as in the present invention, are tested in the durability test using a bench engine. In the durability test, a four cylindered 1.5 ℓ gasoline engine having EGI is used, the exhaust gas temperature is held constant at substantially 500°C, organic silicon is added to a gasoline for the test such that the gasoline contains about 0.02 g of Si per 1 liter, and the durability test duration is 20 hrs.

The results are shown in the following Table 2.

10

λ characteristic property and response time ($T_{RL}$) are measured in the same way as in Example 1.

Table 2

| | Sample No. | Adhered by | Heating of the heater during durability test | λ value (0.4V, 350°C) | | $\Delta T_{RL}$ (350°C) msec |
|---|---|---|---|---|---|---|
| | | | | Before durability test | After durability test | |
| Invention | 1 | MgO | Yes | 0.998 | 0.999 | 20 |
| | 2 | CaO | Yes | 0.999 | 1.002 | 30 |
| | 3 | SrO | Yes | 0.998 | 1.003 | 20 |
| | 4 | BaO | Yes | 1.000 | 1.005 | 10 |
| | 5 | Composition of MgO CaO | Yes | 0.998 | 0.999 | 20 |
| Comparative | 6 | None | Yes | 1.002 | 1.015 | 80 |

As is seen clearly from the above Table 2, the oxygen sensors of the present invention having an adhered oxide of Ca, Sr, or Ba, or an adhered composite of MgO and CaO, exhibit good results similar to the oxygen sensor having the oxide of Mg as compared with the oxygen sensor of the Comparative Example, against the poisoning by silicon. The oxygen sensor having the adhered oxide of Mg gave the

11

EP 0 331 513 B1

smallest change of λ value, showing the best result against the poisoning by silicon.

As appears from the above detailed explanations, the oxygen sensor of the present invention and the method of producing the same can prevent the deterioration of the characteristic properties of oxygen sensors caused by gaseous or ultra fine particulate shaped silicon compounds,by virtue of the presence of at least one oxide selected from the group consisting of oxides of Mg, Ca, Sr, Ba, or mixtures thereof, on the surface or in the pores of the protective layer. Also, the method is simple and easy way of adhering at least one oxide of Mg, Ca, Sr, Ba, or mixtures thereof on the protective layer or in the protective layer, so that the method is economical and easy to apply.

Although the present invention has been explained with specific examples and numerical values, it is of course apparent to those skilled in the art that various changes and modifications thereof are possible.

**Claims**

1. An oxygen sensor comprising:
    an oxygen ion conductive solid electrolyte body (1, 23);
    a reference electrode (2) arranged on the solid electrolyte body and exposed in use to a reference gas;
    a measuring electrode (3) arranged on the solid electrolyte body and exposed in use to a gas to be measured;
    a ceramic protective layer (4,22) arranged on the measuring electrode,
    characterized by an active layer (21,25,27) of particles adhered on the surface or in pores of said ceramic protective layer and effective for conversion of active silicon to stable silica or compounds thereof, said active layer comprising particles consisting essentially of at least one material selected from MgO, CaO, SrO and BaO.

2. An oxygen sensor as defined in claim 1, wherein the active layer comprises at least one of MgO, CaO, SrO and BaO mixed with aluminium oxide and/or silicon oxide.

3. An oxygen sensor as defined in claim 1 or claim 2 which further comprises a heater (8,20b) for heating the solid electrolyte.

4. The oxygen sensor of claim 1, wherein the porosity of the protective layer increases with distance from the measuring electrode.

5. The oxygen sensor of claim 1, wherein the amount of said particles adhered on the protective layer increases towards the outer surface of the protective layer.

6. An oxygen sensor according to any one of claims 1 to 5, wherein the protective layer (4,22) is porous and is formed on the measuring electrode (3), at least the measuring electrode and the porous protective layer being integrally formed by a simultaneous firing, and said active layer of particles is adhered on the surface or in the pores of the protective layer (4).

7. A method of producing an oxygen sensor as defined in any one of claims 1 to 6, wherein a solution, suspension or paste of a compound of at least one of Mg, Ca, Sr and Ba and/or an oxide of at least one of Mg, Ca, Sr and Ba is applied on or impregnated in the protective layer, and then heated to form said active layer in the form of at least one material selected from MgO, CaO, SrO and BaO.

8. A method of producing an oxygen sensor as defined in any one of claims 1 to 6, wherein a compound of at least of Mg, Ca, Sr and Ba and/or oxide of at least one oxide of Mg, Ca, Sr and Ba are adhered chemically or physically on the surface or in the pores of the protective layer, and then fired to form the respective oxide or oxides.

9. A method of preventing silicon poisoning of an oxygen sensor having an oxygen sensor element comprising an oxygen ion conductive solid electrolyte body (1, 23), a measuring electrode (3) and a reference electrode (2) arranged on the oxygen ion conductive solid electrolyte body, and a porous protective layer (4, 22) formed on the measuring electrode, the method comprising a step of forming an active layer of particles of at least one of MgO, CaO, SrO and BaO adhered on the surface or in pores of the protective layer (4, 22) so as to prevent poisoning of the measuring electrode caused by silicon

12

EP 0 331 513 B1

compounds present in a gas to be measured by the oxygen sensor.

**Patentansprüche**

**1.** Sauerstoffsensor, umfassend:
einen sauerstoffionleitenden Trockenelektrolytkörper (1,23);
eine Bezugselektrode (2), die auf dem Trockenelektrolytkörper angeordnet ist und bei der Verwendung einem Bezugsgas ausgesetzt ist;
eine Meßelektrode (3), die auf dem Trockenelektrolytkörper angeordnet ist und bei der Verwendung einem zu messenden Gas ausgesetzt ist;
eine Keramikschutzschicht (4,22), die auf der Meßelektrode angeordnet ist,
gekennzeichnet durch eine aktive Schicht bzw. Wirkschicht (21,25,27) aus Teilchen, die an der Oberfläche oder in Poren der genannten Keramikschutzschicht haften und wirksam zur Umwandlung von aktivem Silizium in stabile Silika oder Verbindungen davon sind, wobei die genannte Wirkschicht Teilchen umfaßt, die im wesentlichen aus zumindest einem Material bestehen, das aus MgO, CaO, SrO und BaO ausgewählt ist.

**2.** Sauerstoffsensor nach Anspruch 1, worin die Wirkschicht zumindest eines aus MgO, CaO, SrO und BaO mit Aluminiumoxid und/oder Siliziumoxid gemischt umfaßt.

**3.** Sauerstoffsensor nach Anspruch 1 oder 2, der weiters ein Heizgerät (8,20b) zum Erwärmen des Trockenelektrolyts umfaßt.

**4.** Sauerstoffsensor nach Anspruch 1, worin die Porosität der Schutzschicht mit dem Abstand von der Meßelektrode zunimmt.

**5.** Sauerstoffsensor nach Anspruch 1, worin die Menge der genannten an der Schutzschicht haftenden Teilchen gegen die äußere Oberfläche der Schutzschicht hin zunimmt.

**6.** Sauerstoffsensor nach einem der Ansprüche 1 bis 5, worin die Schutzschicht (4,22) porös ist und auf der Meßelektrode (3) ausgebildet ist, wobei zumindest die Meßelektrode und die poröse Schutzschicht durch gleichzeitiges Brennen einstückig ausgebildet sind, und die genannte Wirkschicht aus Teilchen an der Oberfläche oder in den Poren der Schutzschicht (4) haftet.

**7.** Verfahren zur Herstellung eines Sauerstoffsensors nach einem der Ansprüche 1 bis 6, worin eine Lösung, Suspension oder Paste einer Verbindung aus zumindest einem aus Mg, Ca, Sr und Ba und/oder einem Oxid von zumindest einem aus Mg, Ca, Sr und Ba auf die Schutzschicht aufgetragen oder diese damit getränkt wird, und dann erwärmt wird, um die genannte Wirkschicht in Form von zumindest einem Material auszubilden, das aus MgO, CaO, SrO und BaO ausgewählt ist.

**8.** Verfahren zur Herstellung eines Sauerstoffsensors nach einem der Ansprüche 1 bis 6, worin eine Verbindung aus zumindest einem aus Mg, Ca, Sr und Ba und/oder Oxid von zumindest einem aus Mg, Ca, Sr und Ba chemisch oder physikalisch dazu gebracht wird, an der Oberfläche oder in den Poren der Schutzschicht zu haften, und dann gebrannt wird, um das/die jeweilige(n) Oxid oder Oxide zu bilden.

**9.** Verfahren zur Verhinderung der Siliziumvergiftung eines Sauerstoffsensors, der ein Sauerstoffsensorelement aufweist, das einen sauerstoffionleitenden Trockenelektrolytkörper (1,23), eine Meßelektrode (3) und eine Bezugselektrode (2), die auf dem sauerstoffionleitenden Trockenelektrolytkörper angeordnet sind, sowie eine poröse Schutzschicht (4,22) umfaßt, die auf der Meßelektrode ausgebildet ist, wobei das Verfahren einen Schritt des Ausbildens einer Wirkschicht aus Teilchen aus zumindest einem aus MgO, CaO, SrO und BaO umfaßt, die an der Oberfläche oder in Poren der Schutzschicht (4,22) haften, um das durch Siliziumverbindungen verursachte Vergiften der Meßelektrode zu verhindern, die in einem durch den Sauerstoffsensor zu messenden Gas vorhanden sind.

13

**EP 0 331 513 B1**

**Revendications**

1. Sonde d'oxygène comprenant :

   un corps (1,23) électrolyte solide conducteur d'ions oxygène;

   une électrode de référence (2) située sur le corps électrolyte solide et exposé en utilisation à un gaz de référence;

   une électrode de mesure (3) située sur le corps électrolyte solide et exposé en utilisation à un gaz à mesurer;

   une couche protectrice en céramique (4, 22) située sur l'électrode de mesure,

   caractérisée par une couche active (21,25,27) des particules collées sur la surface ou dans les pores de ladite couche protectrice en céramique et efficace pour la conversion de silicium actif en silice stable ou en composé de celle-ci, ladite couche active comprenant des particules consistant essentiellement d'un matériau choisi parmi MgO, CaO, SrO et BaO.

2. Sonde d'oxygène selon la revendication 1, dans laquelle la couche active comprend au moins un matériau choisi parmi MgO, CaO, SrO et BaO mélangé avec de l'oxyde d'aluminium et/ou de l'oxyde de silicium.

3. Sonde d'oxygène selon la revendication 1 ou 2, qui comprend de plus un dispositif de chauffage (8,20b) pour chauffer l'électrolyte solide.

4. Sonde d'oxygène selon la revendication 1, dans laquelle la porosité de la couche protectrice augmente avec la distance à partir de l'électrode de mesure.

5. Sonde d'oxygène selon la revendication 1, dans laquelle la quantité desdites particules collées sur la couche protectrice augmente vers la surface extérieure de la couche protectrice.

6. Sonde d'oxygène selon l'une quelconque des revendications 1 à 5, dans laquelle la couche protectrice (4,22) est poreuse et est formée sur l'électrode de mesure (3), au moins l'électrode de mesure et la couche protectrice poreuse étant intégralement formées par une calcination simultanée, et ladite couche active de particules est collée sur la surface ou dans les pores de la couche protectrice (4).

7. Procédé de production d'une sonde d'oxygène telle que définie dans l'une quelconque des revendications 1 à 6, dans laquelle une solution, suspension ou pâte d'un composé d'au moins un composé parmi Mg, Ca, Sr et Ba et/ou un oxyde d'au moins l'un parmi Mg, Ca, Sr et Ba est appliqué sur ou imprégné dans la couche protectrice, et ensuite chauffé pour former ladite couche active sous la forme d'au moins un matériau choisi parmi MgO, CaO, SrO et BaO.

8. Procédé de production d'une sonde d'oxygène telle que définie dans l'une quelconque des revendications 1 à 6, dans laquelle un composé d'au moins un composé parmi Mg, Ca, Sr et Ba et/ou un oxyde d'au moins un oxyde de Mg, Ca, Sr et Ba sont collés chimiquement ou physiquement sur la surface ou dans les pores de la couche protectrice, et ensuite calciné pour former l'oxyde ou les oxydes respectifs.

9. Procédé de prévention de l'empoisonnement au silicium d'une sonde d'oxygène ayant un élément de sonde d'oxygène comprenant un corps (1, 23) électrolyte solide conducteur d'ions oxygène, une électrode de mesure (3) et une électrode de référence (2) placée sur le corps électrolyte solide conducteur d'ions oxygène, et une couche (4, 22) protectrice poreuse formée sur l'électrode de mesure, la méthode comprenant une étape de formation d'une couche active de particules d'au moins un des composés MgO, CaO, SrO et BaO collé sur la surface ou dans les pores de la couche (4,22) protectrice de façon à prévenir l'empoisonnement de l'électrode de mesure provoqué par les composés de silicium présents dans un gaz à mesurer par la sonde d'oxygène.

14

# FIG. 1

# FIG. 2

# FIG. 3a

# FIG. 3b

# FIG.4

# FIG.5

# FIG.6

# FIG.7

# FIG.8

25
27
22
24
23

# FIG.9

21
28
22
24
23